(19) Europäisches Patentamt
European Patent Office
Office européen des brevets

(11) **EP 2 184 825 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(51) Int Cl.:
*H02G 9/06* *(2006.01)*    *F16L 9/19* *(2006.01)*
*F16L 3/223* *(2006.01)*   *H02G 3/04* *(2006.01)*
*F16L 39/00* *(2006.01)*

(21) Anmeldenummer: **09006774.5**

(22) Anmeldetag: **20.05.2009**

(54) **Rohrpaket**

Pipe package

Paquet de tuyaux

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **05.11.2008 EP 08019355**

(43) Veröffentlichungstag der Anmeldung:
**12.05.2010 Patentblatt 2010/19**

(73) Patentinhaber: **Dipl.-Ing. Dr. Ernst Vogelsang GmbH & Co. KG**
**D-45699 Herten (DE)**

(72) Erfinder: **Vogelsang, Horst**
**45699 Herten (DE)**

(74) Vertreter: **Nunnenkamp, Jörg**
**Andrejewski - Honke**
**Patent- und Rechtsanwälte**
**An der Reichsbank 8**
**45127 Essen (DE)**

(56) Entgegenhaltungen:
**DE-A1- 2 701 209    DE-U1- 20 102 174**
**US-A- 1 799 672    US-A- 1 818 922**
**US-A- 5 813 106**

**Beschreibung**

Die Erfindung betrifft ein Rohrpaket aus einzelnen Rohren, insbesondere Kabelschutzrohren, wobei die Rohre längs verlaufend zueinander mittels zumindest eines zwischengeschalteten Abstandhalters verbindungsfrei zusammengefasst sind, wobei ferner der Abstandhalter einen zwischen den Rohren verbleibenden Zwischenraum im Wesentlichen vollständig ausfüllt und zumindest eine zusätzliche außenumfangseitige Umreifung vorgesehen ist, wobei weiter wenigstens ein ergänzender und seitlich angebrachter Abstützhalter zur zusammengesetzten Bildung eines Einbaurohrbündels realisiert ist, und wobei der Abstandhalter und/oder Abstützhalter jeweils den zwischen den Rohren verbleibenden Zwischenraum sowohl in Längsrichtung als auch in Querrichtung im Wesentlichen vollständig ausfüllen.

Bei einem Rohrpaket des eingangs beschriebenen Aufbaus, wie es in der US 5 813 106 A beschrieben wird, sind sowohl die Abstandhalter als auch die Abstützhalter jeweils aus extrudiertem PVC hergestellt. Dadurch stellt sich ein hohes Gewicht des solchermaßen realisierten Rohrpaketes dar. Das erschwert die Handhabung und macht in der Regel den Einsatz von Kränen und schwerem Gerät bei der Verlegung erforderlich.

Rohre, insbesondere Kabelschutzrohre werden überwiegend im Boden verlegt und dienen beispielsweise zur Aufnahme von Telefonkabeln, Fernsehkabeln, Stromkabeln oder dergleichen. Sie können aber auch für die Gas- und/oder Wasserversorgung eingesetzt werden.

Es ist bereits bekannt, so genannte Rohrverbunde aus Kabelschutzrohren herzustellen, wie dies die DE 298 07 441 U1 oder auch die DE 297 24 702 U1 beschreiben. In beiden Fällen ist letztlich eine die Rohre außenumfangseitig umschließende Deckschicht realisiert, um den Rohrverbund zu erhalten. Ähnlich geht die DE 33 08 482 A1 vor.

Daneben ist es aus der Praxis bekannt, Rohrpakete bzw. Einbaurohrbündel, also Zusammenstellungen aus Rohren, die im Gegensatz zum Rohrverbund nicht miteinander gekoppelt sind, am Einbauort herzustellen. Hierzu sind Abstandhalter vorgesehen, die für eine gewisse gegenseitige Fixierung der Rohre sorgen. Gleichwohl ist es am Einbauort erforderlich, den zwischen den Abstandklemmen bzw. Abstandhaltern befindlichen Freiraum mit Sand zu verfüllen. Meistens muss der Sand zudem noch verdichtet werden, um beispielsweise nach der Verlegung der Rohre ein Überfahren der Oberfläche mit LKWs oder dergleichen zu gewährleisten.

Die bisher beschriebene Vorgehensweise erfordert also zwangsläufig, dass der zwischen den Rohren verbleibende Freiraum oder Zwischenraum mit Sand oder einem anderen Füllmittel aufgefüllt wird und das Rohrpaket insgesamt eine Stabilisierung erfährt, damit nicht etwaige verbleibende Hohlräume zu einer Beschädigung bei eine Druckbelastung an der Oberfläche führen. Das Verfüllen mit Feinsand im Beispielfall sowie das zugehörige Verdichten erfordern jedoch nicht nur ergänzenden Materialeinsatz, sondern sind insbesondere vom Arbeitsaufwand her nachteilig.

Das gilt auch für ein Rohrpaket, wie es in der US 1 818 922 vorgestellt wird. Denn hier geht es im Kern um Stahlrohre, die mit Hilfe von Abstandhaltern aus Beton zu einem Rohrpaket vereinigt werden. Eine solche Vorgehensweise ist für Kabelschutzrohre nachteilig, weil hieraus aufgebaute Rohrpakete überwiegend manuell verlegt werden sollen, was bei dem bekannten Rohrpaket augenscheinlich nicht möglich ist.

Zum Stand der Technik gehört auch ein Verfahren zum Verlegen unterirdischer Kabelstränge, wie es in der DE 27 01 209 A1 beschrieben wird. Dabei werden die einzelnen Kabelrohre zu einem Bündel zusammengefasst und miteinander verbunden. Hierzu werden die Rohre mittels Spannbändern zusammengehalten. Außerdem sind Abstandstücke oder sternförmige Körper vorgesehen, welche die Rohre auf Abstand halten.

Schlussendlich beschreibt das Gebrauchsmuster DE 297 21 044 U1 ein Rohraggregat, bei welchem die Kunststoffrohre im Bereich ihrer Rohrmäntel adhäsiv miteinander verbunden sind und folglich einen Rohrverbund und kein Rohrpaket bzw. ein Einbaurohrbündel bilden. Denn Infolge dieser adhäsiven Verbindung lassen sich mit dem bekannten Rohrverbund kaum Kurven oder Biegungen bei der Verlegung realisieren. Der Verlegevorgang ist also mit erheblichen Schwierigkeiten verbunden bzw. vom Einsatzgebiet her äußerst beschränkt.

Der Erfindung liegt das technische Problem zugrunde, ein Rohrpaket aus einzelnen Rohren, insbesondere Kabelschutzrohren, der eingangs beschriebenen Ausführungsform so weiterzuentwickeln, dass insbesondere die Kosten für die Verlegung des Rohrpaketes gegenüber bisherigen Vorgehensweisen deutlich verringert sind.

Zur Lösung dieser Aufgabenstellung, schlägt die Efindung bei einem gattungsgemäßen Rohrpaket vor, dass der Abstandhalter und/oder der jeweilige Abstützhalter aus einem frei formbaren aufgeschäumten thermoplastischen Kunststoff hergestellt sind. Auf diese Weise lässt sich ein einbaufertiges Einbaurohrbündel realisieren.

Dabei wird der von dem Abstandhalter vollständig ausgefüllte Zwischenraum regelmäßig von den Rohren des Rohrpaketes außenseitig begrenzt. Dagegen ist der mit Hilfe des Abstützhalters geschlossene Zwischenraum üblicherweise nach außen hin geöffnet, beispielsweise im Querschnitt trichterförmig. Im Rahmen der Erfindung kommt nun wenigstens ein Abstützhalter in Verbindung mit dem Abstandhalter zum Einsatz. Dadurch wird wenigstens einer der meistens mehreren (trichterförmigen) Zwischenräume am Außenumfang des solchermaßen hergestellten Rohrpaketes geschlossen. Selbstverständlich können aber auch zwei Abstützhalter zum Einsatz kommen, so dass das auf diese Weise hergestellte und regelmäßig quaderförmige Rohrpaket an zumindest zwei Seiten eine mehr oder minder geschlossene Oberfläche besitzt. Auch lassen sich natürlich sämtliche (trichterförmigen) Zwischenräume randseitig des Rohrpaketes durch die jeweils eingebrachten Abstützhalter schließen.

Im Allgemeinen sind also mehrere seitlich im Vergleich zu den Rohren angebrachte Abstützhalter vorgesehen. Dabei formen der wenigstens eine zentrale Abstandhalter und die zusätzlich seitlich angebrachten Abstützhalter zusammengenommen und in Verbindung mit den Rohren das erfindungsgemäße Rohrpaket. Dieses Rohrpaket ist vorteilhaft hinsichtlich seiner Oberfläche geschlossen oder nahezu geschlossen ausgestaltet und definiert das einbaufertige Einbaurohrbündel. Dabei ist das Einbaurohrbündel im Regelfall bis auf einen etwaigen Verbindungsbereich zu einem benachbarten Einbaurohrbündel überwiegend quaderförmig gestaltet bzw. verfügt über eine quaderförmige Raumform.

Auf diese Weise wird im Rahmen der Erfindung ein Rohrpaket zur Verfügung gestellt, das zunächst einmal und vorteilhaft über eine quaderförmige oder nahezu quaderförmige Raumform verfügt und eine insgesamt geschlossene oder nahezu geschlossene Oberfläche aufweist. Denn die einzelnen und zwischen den Rohren verbleibenden Hohlräume werden mit Hilfe des Abstandhalters sowie unter Rückgriff auf den einen oder die mehreren Abstützhalter vollständig oder nahezu vollständig geschlossen. Dadurch muss ein zwischen den einzelnen, Rohren verbleibender Hohlraum nicht mehr aufwendig in einer Baugrube für die Verlegung des Rohrpaketes verfüllt werden. Vielmehr ersetzt der Abstandhalter bzw. ersetzen der eine oder die mehreren Abstützhalter diesen Verfüllvorgang.

Das gelingt im Wesentlichen dadurch, dass der erfindungsgemäße Abstandhalter und/oder der Abstützhalter den zwischen den Rohren verbleibenden Zwischenraum im Wesentlichen vollständig äusfüllen, und zwar sowohl in Längs- als auch in Querrichtung. Hierunter ist im Rahmen der Erfindung zu verstehen, dass der Zwischenraum jedenfalls so weit mit Hilfe des räumlich ausgedehnten Abstandhalters oder der mehreren Abstandhalter sowie des einen Abstützhalters oder der mehreren Abstützhalter ausgefüllt wird, dass etwaige verbleibende Hohlräume keine zusätzliche Füllung erfordern.

Als Folge hiervon entspricht die Stabilität des im Rahmen der Erfindung hergestellten Rohrpaketes im Wesentlichen derjenigen, wie sie zuvor mit einer Sandfüllung im Zwischenraum bzw. in den mehreren Zwischenräumen erreicht wurde. Das gilt insbesondere für Kraftbelastungen in Querrichtung des Rohrpaketes.

Denn die Rohre bzw. das Rohrpaket werden im Allgemeinen längs verlaufend im Erdboden verlegt. Als Folge hiervon müssen insbesondere Belastungen in Querrichtung der Rohre aufgenommen werden, wenn beispielsweise die Verlegung unterhalb einer Straße, einer Schienentrasse etc. erfolgt. Mit den erfindungsgemäß eingesetzt und praktisch den gesamten Zwischenraum zwischen den Rohren in Längs- und Querrichtung füllenden Abstandhaltern und/oder Abstützhaltern gelingt es nun, dass solche Querkräfte problemlos aufgenommen werden können, ohne dass die Rohre ihre gegenseitige Position zueinander verändern. Als Folge hiervon wird die Oberfläche auch nicht beeinträchtigt, sind insbesondere keine Löcher, abgesackte Bereiche etc. zu beobachten. Tatsächlich führt eine (übermäßige) Kraftbeaufschlagung des erfindungsgemäßen Rohrpaketes in Querrichtung zu seiner Längserstreckung immer zuerst dazu, dass das jeweils beaufschlagte Rohr kollabiert, bevor der Abstandhalter als solcher eine Beschädigung erfährt bzw. ein oder mehrere Rohre des Rohrpaketes ausweichen.

Dabei greift die Erfindung vorteilhaft auf einen amorphen oder teilkristallinen Thermoplast zurück.

Der Abstandhalter bzw. Abstützhalter ist regelmäßig gegenüber Wasser, aber auch im Vergleich zu Laugen und sogar Säuren beständig, was für den beschriebenen Einsatzzweck vonnöten ist. Außerdem verfügt der Abstandhalter bzw. Abstützhalter meist über eine geringe Wärmeleitfähigkeit, um die einzelnen zum Rohrpaket zusammengefassten Rohre thermisch voneinander zu isolieren. Diese thermische Isolierung wird noch dadurch gesteigert, dass die Rohre weder untereinander noch mit dem Abstandhalter bzw. Abstützhalter oder der Umreifung eine (feste) Verbindung eingehen. Vielmehr stellt das Rohrpaket eine wieder lösbare Zusammenstellung der Rohre dar, die beispielsweise durch Trennen der Umreifung wieder aufgehoben werden kann.

Die im Rohrpaket unverändert gegebene Beweglichkeit der einzelnen Rohre zueinander und im Vergleich zu dem einen oder den mehreren Abstandhaltern (Abstützhaltern) ist aus mehreren Gründen besonders vorteilhaft. Zunächst einmal bleiben die Rohre flexibel, so dass das Rohrpaket unschwer Biegungen in einer Baugrube folgen kann. Außerdem lassen sich die Rohre innerhalb des Rohrpaketes zumindest teilweise in axialer Richtung bewegen, was für die Verbindung einzelner Rohre untereinander mit Hilfe einer Muffe, insbesondere Steckmuffe von Bedeutung ist. Denn beim Herstellen einer solchen Muffenverbindung werden die beiden zu verbindenden Rohre meistens beidseitig bis zum Erreichen eines Anschlags im Innern der Muffe gegeneinander axial unter Abstandsverringerung bewegt. Jedenfalls verfügen die Rohre innerhalb des Rohrpaketes nach wie vor und unverändert über die erforderliche Flexibilität, um eine einfache Verlegung und Handhabung, insbesondere Verbindung mit weiteren Rohren in Längsrichtung, zu ermöglichen.

Erfindungsgemäß, kommt zur Herstellung des Abstandhalters (Abstützhalters) ein aufgeschäumter thermoplastischer Kunststoff, beispielsweise Polystyrol (PS), zum Einsatz. Derartige Kunststoffe verfügen über ein geringes spezifisches Gewicht von weniger als 100 kg/m$^3$, insbesondere weniger als 50 kg/m$^3$, so dass das hergestellte Rohrpaket von seinem Gesamtgewicht her problemlos manuell zu handhaben ist, auch und insbesondere dann, wenn der zwischen den Rohren verbleibende Zwischenraum praktisch vollständig von dem Abstandhalter oder den mehreren Abstandhaltern bzw. den Abstützhaltern ausgefüllt wird. Denn das äußerst geringe spezifische Gewicht der Abstandhalter (Abstützhalter) sorgt dafür, dass das Gesamtgewicht des solchermaßen konfektionierten Rohrpaketes gegenüber den Einzelrohren praktisch kaum oder nicht nennenswert steigt.

Da aufgeschäumter thermoplastischer Kunststoff, insbesondere Polystyrol, weder wasserlöslich ist noch von Wasser angequollen wird, ist davon auszugehen, dass der betreffende Abstandhalter (Abstützhalter) seiner Funktion auch bei einer Erdverlegung praktisch unbegrenzt nachkommt. Hinzu kommt, dass der Längenänderungskoeffizient mit ca. $0{,}07 \frac{mm}{m \cdot K}$ gering ist. Das heißt, erst bei einer Temperaturänderung um ca. 17 K tritt eine reversible Maßänderung respektive Längenänderung von 1 mm/m entsprechend 0,1 % auf.

Da die Rohre bzw. die Kabelschutzrohre ausdrücklich nicht fest mit dem Abstandhalter (Abstützhalter) und der Umreifung verbunden sind, also an dem Abstandhalter (Abstützhalter) und der Umreifung verbindungsfrei anliegen, können sich die Rohre und der Abstandhalter (Abstützhalter) unabhängig voneinander und gegeneinander bewegen. Vergleichbares gilt für die Rohre im Vergleich zur Umreifung. Hierzu trägt ergänzend der Umstand bei, dass der Abstandhalter (Abstützhalter) und/oder die Umreifung wenigstens in ihren jeweiligen Berührbereichen mit vergleichbaren Reibwerten wie eine Außenoberfläche der Rohre ausgerüstet sind.

Da die Umreifung in der Regel aus ein oder mehreren Umreifungsbändem zusammengesetzt ist, welche die Rohre inklusive zwischengeschaltetem Abstandhalter (Abstützhalter) außen in Querrichtung umschlingen und im Übrigen vorteilhaft aus Kunststoff gefertigt sind, werden insgesamt Reibungen Kunststoff-Kunststoff beobachtet. Das gilt sowohl für das Materialpaar "Rohr-Umreifung", als auch für die Paarung "Rohr-Abstandhalter' sowie "Rohr-Abstützhalter". Denn die Rohre sind üblicherweise aus Kunststoff hergestellt und verfügen meistens noch über eine äußere (weiße) Beschichtung, wie dies in der DE 298 07 441 U1 beschrieben ist. Das heißt, die Außenbeschichtung wird meist aus Polyethylen hergestellt.

Jedenfalls werden in der Regel Reibzahlen von ca. 0,05 oder weniger für die beschriebenen Reibpaare beobachtet, die gewährleisten, dass sich die Rohre (geringfügig) gegenüber dem Abstandhalter (Abstützhalter) hin und herbewegen können. Das Gleiche gilt für Bewegungen der Rohre gegenüber dem einen oder den mehreren Umreifungsbändem, welche die Rohre inklusive zwischengeschaltetem Abstandhalter (Abstützhalter) außen in Querrichtung umschlingen. Solche Relativbewegungen zwischen den Rohren und dem Abstandhalter (Abstützhalter) einerseits und den Rohren und der Umreifung anderer seits werden im Rahmen der Erfindung ausdrücklich zugelassen, und zwar nicht nur, um etwaige Temperatureffekte und unterschiedliche Längenausdehnungen aufzufangen, sondern auch verschiedene Untergrundbeschaffenheiten beim Verlegen. Als Folge hiervon verfügt das erfindungsgemäße Rohrpaket über eine vergleichbare Flexibilität, wie sie schon bisher mit dem in den Zwischenraum eingebrachten Füllsand erreicht wird.

Hinzu kommt, dass der eingesetzte Abstandhalter (Abstützhalter) aus dem aufgeschäumten thermoplastischen Werkstoff, insbesondere Polystyrol, ähnlich elektrisch isolierend wirkt wie Luft. Dies lässt sich im Kern darauf zurückführen, dass Luft mit ca. 98 Vol.% den Hauptbestandteil des aufgeschäumten Kunststoffes darstellt. Regelmäßig werden Luftanteile in dem aufgeschäumten Kunststoff von mehr als 50 Vol.%, insbesondere mehr als 80 Vol.%, eingestellt. Schlussendlich wird auch eine besondere biologische Verträglichkeit beobachtet, welche die betreffenden Abstandhalter (Abstützhalter) für den Einsatz im Erdreich prädestiniert. Die besondere Steifigkeit des Werkstoffes kommt dadurch zum Ausdruck, dass die Druckspannung bei ca. 10% Stauchung im Bereich von etwa 200 kPa entsprechend 0,20 N/mm$^2$ liegt.

Im Ergebnis wird ein Rohrpaket zur Verfügung gestellt, mit dessen Hilfe Rohre besonders kostengünstig in der Erde verlegt werden können. Tatsächlich stellt der räumlich ausgedehnte und praktisch den gesamten verbleibenden Zwischenraum zwischen den Rohren im Wesentlichen ausfüllende Abstandhalter (Abstützhalter) sicher, dass bisher erforderliche Verfüllungsmaßnahmen oder auch Verdichtungsmaßnahmen entbehrlich sind. Das heißt, das Rohrpaket wird in seiner in einer Baugrube verlegten Losgröße herstellerseitig komplett konfektioniert. Vor Ort ist es dann lediglich noch erforderlich, das Rohrpaket in der Baugrube zu verlegen, ggf. mit anderen Rohrpaketen zu verbinden und dann die Baugrube zu schließen.

Etwaige Verfüllungs-, Verdichtungs- oder andere Maßnahmen sind nicht (mehr) erforderlich. In diesem Zusammenhang sorgt der Abstandhalter (Abstützhalter) mit seinem geringen spezifischen Gewicht dafür, dass das Rohrpaket unschwer beispielsweise von Hand transportiert werden kann und gegenüber dem Transport der Rohre alleine nicht signifikant mehr Transportvolumen benötigt wird. In der Baugrube und beim anschließenden Betrieb verfügen die Rohre über die erforderliche Flexibilität zueinander und im Vergleich zum Abstandhalter (Abstützhalter), so dass die Rohre problemlos in Bögen verlegt werden können und sich außerdem Temperaturunterschiede nicht auswirken. Immer sorgt das Zusammenspiel von dem den Zwischenraum zwischen den Rohren ausfüllendem Abstandhalter (Abstützhalter) mit der Umreifung dafür, dass die Rohre ihre Positionen in den außenseitigen Aufnahmen des Abstandhalters (Abstützhalters) und/oder in den Innenaufnahmen des Abstandhalters (Abstützhalters) beibehalten.

Tatsächlich verfügt der Abstandhalter (Abstützhalter) in der Regel über an den Außendurchmesser angepasste außenseitige Aufnahmen und einen zentralen Kern. In diesem Kern mögen darüber hinaus noch Innenaufnahmen vorgesehen werden, in welche die Rohre eingeschoben werden. Es ist aber auch möglich, die Innenaufnahmen so zu realisieren, dass mehrere Abstandhalter im Querschnitt zu einem größeren Abstandhalter zusammengefügt werden. Weil die Rohre in den Außenaufnahmen und/oder den Innenaufnahmen zumindest teilweise formschlüssig gehalten sind, ist davon auszugehen, dass die Rohre nach Herstellung des Rohrpaketes, während des Transportes, beim Verlegen und im anschließenden Betrieb zuverlässig ihre Position zueinander beibehalten. Schlussendlich hat es sich bewährt, wenn der Abstandhalter (Abstützhalter) insgesamt spiegelsymmetrisch zu wenigstens einer Symmetrieebene ausgeführt ist. Dadurch lässt sich das Rohrpaket insgesamt quaderförmig ausbilden. In diesem Zusammenhang sind in der Regel die Rohre so angeordnet und zueinander ausgerichtet, dass sie jeweils ohne Überlapp zueinander platziert sind. Hierin sind die wesentlichen Vorteile zu sehen.

Im Folgenden wird die Erfindung anhand einer lediglich ein Ausführungsbeispiel darstellenden Zeichnung näher erläutert; Es zeigen:

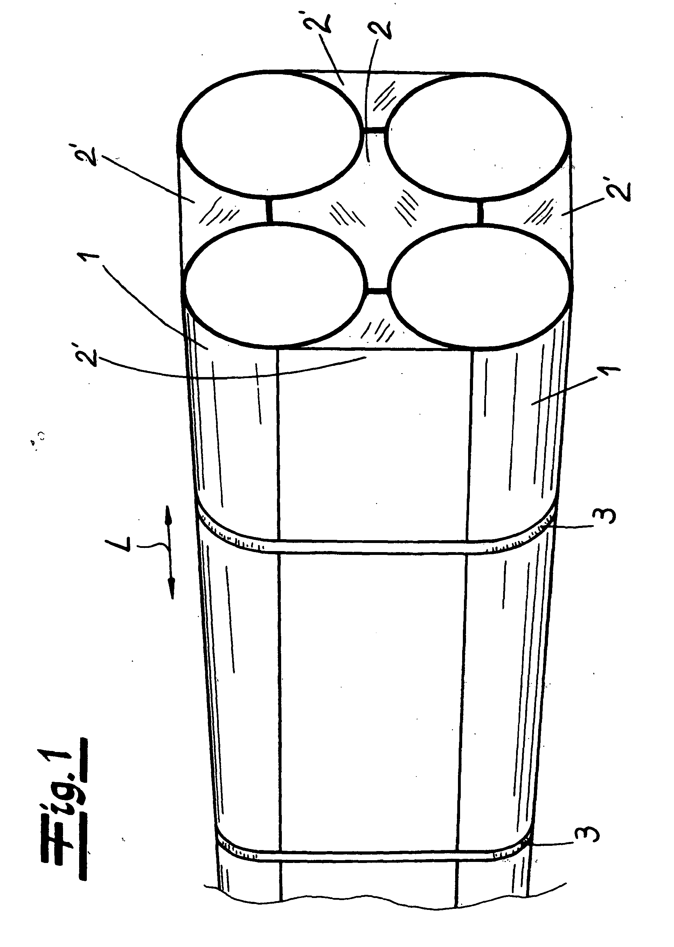

Fig. 1          das erfindungsgemäße Rohrpaket in einer perspektivischen Ansicht,

Fig. 2          den Gegenstand nach Fig. 1 in einer Frontansicht,

Fig. 3          eine abgewandelte Ausführungsform der Fig. 2 und

Fig. 4A und 4B     einen Schnitt durch ein Rohrpaket im jeweiligen End- bereich.

In den Figuren ist ein Rohrpaket dargestellt. Dieses Rohrpaket setzt sich aus einzelnen Rohren 1 zusammen, die im Wesentlichen parallel zueinander und längs verlaufend zu dem Rohrpaket zusammengefasst sind. Bei dem Rohrpaket handelt es sich folglich um eine (lose) Zusammenstellung der Rohre 1, die weder untereinander und auch nicht mit einem Abstandhalter 2 (Abstützhalter 2') sowie Umreifungsbändern 3 verbunden sind. Gleichwohl sorgt natürlich das Zusammenspiel des Abstandhalters 2 bzw. des Abstützhalter 2' mit den Umreifungsbändern 3 dafür, dass die Rohre 1 eine (lösbare) Zusammenfassung zu dem Rohrpaket bzw. Einbaurohrbündel erfahren.

Bei den Rohren 1 handelt es sich um Kabelschutzrohre 1, die eine weißfarbige Außenschicht aus beispielsweise Polyethylen aufweisen, was allerdings nicht zwingend ist. Um die Rohre bzw. Kabelschutzrohre 1 in ihrer dargestellten Position zueinander zu halten und das Rohrpaket zu definieren, ist der bereits angesprochene Abstandhalter 2 bzw. Abstützhalter 2' vorgesehen, welcher zwischen die Rohre 1 zwischengeschaltet ist und über eine verbindungsfreie Ausführung verfügt. Das heißt, zwischen den Rohren bzw. Kabelschuttrohren 1 und dem Abstandhalter 2 (Abstützhalter 2') liegt keine mechanische Verbindung vor. Vergleichbares gilt für die Umreifungsbänder 3, die ebenfalls nicht mechanisch mit den Rohren bzw. Kabelschutzrohren 1 gekoppelt sind.

Gleichwohl werden die Rohre respektive Kabelschutzrohre 1 zu dem Rohrpaket zusammengefügt, weil die Umreifungsbänder 3 die einzelnen Rohre 1 an den Abstandhalter 2 (Abstützhalter 2') anlegen und so die lose Zusammenstellung respektive Zusammenfassung der Rohre 1 definieren. Dabei kann mit Hilfe der Umreifungsbänder 3 der erforderliche Druck auf die Rohre 1 ausgeübt werden. Dies umso mehr, als die Rohre 1 ebenso wie die Umreifungsbänder 3 elastisch ausgestaltet sind.

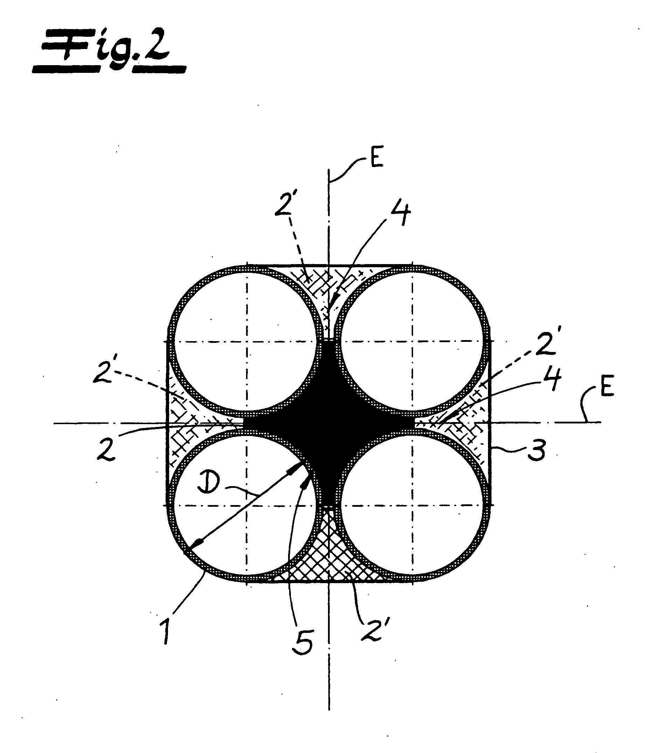

Zu dem Abstandhalter 2 treten ausweislich der Fig. 2 bis 4 noch der eine oder die mehreren ergänzend und seitlich angebrachten Abstützhalter 2' hinzu. Der eine oder die mehreren Abstandhalter 2 sowie der eine oder die mehreren Abstützhalter 2' dienen in Verbindung mit den zwischengeschalteten Rohren 1 zur zusammengesetzten Bildung des einbaufertigen Einbaurohrbündels.

Anhand der Figuren erkennt man, dass sowohl der jeweilige Abstandhalter 2 als auch der jeweilige Abstützhalter 2' jeweils einen zwischen den Rohren 1 verbleibenden Zwischenraum 4 sowohl in Längsrichtung L als auch in Querrichtung Q im Wesentlichen vollständig ausfüllen. Der Abstandhalter 2 und auch der Abstützhalter 2' sind aus einer frei formbaren Masse gefertigt, bestehen im Ausführungsbeispiel aus einem Kunststoff. Bei diesem Kunststoff handelt es sich insbesondere um einen amorphen oder teilkristallinen Thermoplast. Erfindungsgemäß kommt ein aufgeschäumter thermoplastischer Kunststoff, insbesondere Polystyrol (PS), zum Einsatz.

Auf diese Weise sind sowohl der Abstandhalter 2 als auch der Abstützhalter 2' im Wesentlichen gegenüber Wasser, Laugen- und sogar Säuren beständig und verfügen im Übrigen über ein äußerst geringes spezifisches Gewicht von deutlich unter 100 kg/m$^3$. Dadurch kann das erfindungsgemäße Rohrpaket aus den einzelnen Rohren 1 in Verbindung mit dem Abstandhalter 2 sowie den meistens mehreren seitlich angebrachten Abstützhaltern 2' und dem Umreifungsband 3 bzw. den mehreren Umreifungsbändern 3 problemlos von Hand transportiert und verlegt werden. Es sind also keine aufwendigen Verlegemaschinen oder entsprechende Maßnahmen erforderlich.

Die Verlegung wird zusätzlich noch dadurch vereinfacht, dass der regelmäßig zentral angeordnete Abstandhalter 2 und die seitlich angebrachten Abstützhalter 2' zusammen mit den Rohren 1 das Einbaurohrbündel definieren, welches hinsichtlich seiner Oberfläche geschlossen oder nahezu geschlossen ausgebildet ist. Außerdem verfügt das Einbaurohrbündel bzw. das solchermaßen hergestellte Rohrpaket über eine im Wesentlichen quaderförmige Raumform, und zwar bis auf einen etwaigen Verbindungsbereich zu einem benachbarten Einbaurohrbündel bzw. Rohrpaket.

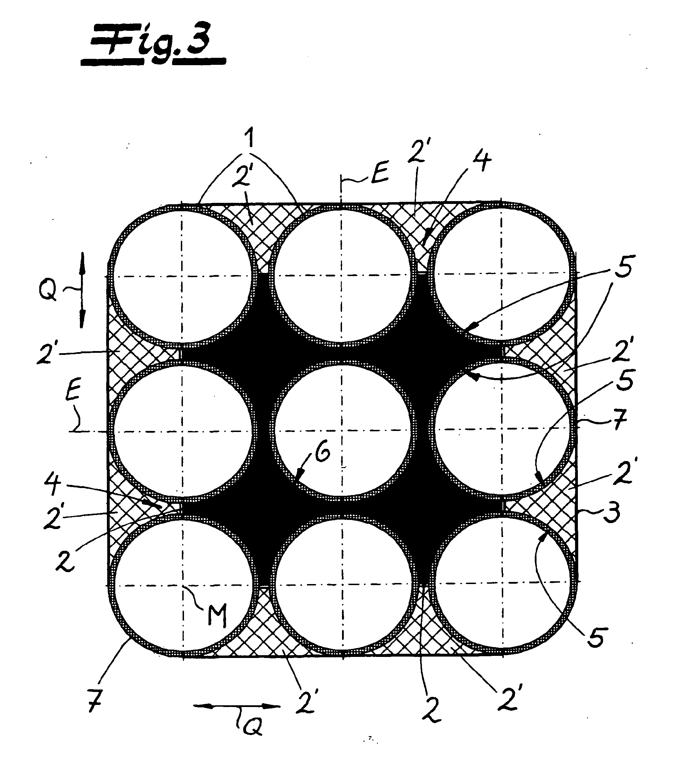

Man erkennt, dass der Abstandhalter 2 und auch der Abstützhalter 2' mit außenseitigen Aufnahmen 5 ausgerüstet sind, welche an einen Rohraußendurchmesser D der Rohre 1 angepasst sind. Darüber hinaus mögen auch noch Innenaufnahmen 6 ähnlicher Anpassung realisiert sein, wie sie in der Fig. 3 dargestellt sind. Diese Innenaufnahmen 6 können in einem entsprechend geformten Abstandhalter 2 definiert sein, wobei ein Rohr 1 hierin eingesteckt wird. Es ist aber auch möglich, mehrere Abstandhalter 2 so zu einem Gesamtabstandhalter 2 in Querrichtung Q zusammenzufügen, dass insgesamt die Konstellation nach Fig. 3 vorliegt, dann allerdings nicht unter Rückgriff auf einen Abstandhalter 2, sondern auf mehrere in Querrichtung Q zusammengefügte Abstandhalter 2.

Der jeweilige Abstandhalter 2 oder die mehreren Abstandhalter 2 füllen in Verbindung mit dem einen oder den mehreren Abstützhaltern 2' - wie gesagt - den Zwischenraum 4 zwischen den Rohren 1 in Längsrichtung L und Querrichtung Q praktisch vollständig aus, damit beim Einbringen des dargestellten Rohrpaketes in eine Baugrube der Zwischenraum 4 nicht mehr mit beispielsweise Sand oder anderen Materialien ausgefüllt werden muss. Mit Hilfe der Umreifungsbänder 3 bzw. allgemein der Umreifung 3 werden die Rohre 1 an die Aufnahmen 5 bzw. 6 angelegt und wird das Rohrpaket insgesamt definiert. Dabei werden die Rohre 1 jeweils zumindest teilweise formschlüssig in den außenseitigen Aufnahmen bzw. Außenaufnahmen 5 und/oder den Innenaufnahmen 6 des einen oder der mehreren Abstandhalter 2 bzw. Abstützhalter 2' gehalten.

Im Rahmen der Fig. 2 ist durchgezogen lediglich ein zusätzlicher Abstützhalter 2', realisiert, welcher im bodenseitigen Bereich des Rohrpaketes eingesetzt wird und dazu dient, etwaige auf das Rohrpaket wirkende Kräfte in eine Sohle in einer Baugrube problemlos einzuleiten. Auf diese Weise wird das Rohrpaket wenigstens bodenseitig geschlossen und definiert in diesem Bodenbereich in Verbindung mit dem besagten Abstützhalter 2', eine insgesamt mehr oder minder geschlossene Bodenfläche. Diese Bodenfläche liegt unmittelbar auf der Sohle der besagten Baugrube auf und kann auch auf der Sohle aufliegen. Dadurch lassen sich etwaige auf das Rohrpaket einwirkende Kräfte von oben vollflächig auf die Sohle übertragen. Außerdem zeigt die Fig. 2 optionale zusätzliche seitliche Abstützhalter 2', die gestrichelt dargestellt sind.

Die Fig. 3 zeigt nun ausdrücklich, dass nach bevorzugter Ausführungsform mehrere seitlich angebrachte Abstützhalter 2', realisiert sind, um etwaige seitliche und verbleibende Hohlräume bzw. Zwischenräume 4 zu schließen. Tatsächlich sind in diesem Ausführungsbeispiel sämtliche seitlich verbleibenden Hohlräume bzw. Zwischenräume 4 durch jeweils Abstützhalter 2', ausgefüllt. Auf diese Weise verleihen die Abstützhalter 2', in Verbindung mit dem Abstandhalter 2 dem Rohrpaket eine bis einen etwaigen Verbindungsbereich zu einem benachbarten Rohrpaket geschlossene Oberfläche. Außerdem wird hierdurch ein nahezu quaderförmiges Einbaurohrbündel definiert, welches sich problemlos verlegen lässt und insbesondere eine Verfüllung von den Zwischenräumen 4 zwischen den Rohren 1 entbehrlich macht. Dabei ist es ergänzend selbstverständlich möglich, das Einbaurohrbündel bzw. das solchermaßen hergestellte Rohrpaket mit einer außenumfangseitig umschließenden Deckschicht auszurüsten, wie sie der einleitend bereits behandelte Stand der Technik erkennen lässt. Aufgrund des geschlossenen oder nahezu geschlossenen Zustandes der Oberfläche des Rohrpaketes bzw. des Einbaurohrbündels ist eine solche ergänzende umschließende Deckschicht jedoch im Allgemeinen nicht erforderlich.

Insgesamt ist die Auslegung so getroffen, dass das Rohrpaket über eine quaderförmige Gestalt verfügt. Die Rohre 1 sind jeweils in Reihen und in Längsrichtung angeordnet, das heißt, ohne Überlapp zueinander. Mit anderen Worten schließen die Rohre in Längsrichtung im Allgemeinen aneinander an und sind beispielsweise nicht ineinander gesteckt. Der jeweilige Abstandhalter 2 verfügt über eine spiegelsymmetrische Ausgestaltung im Vergleich zu wenigstens einer Symmetrieebene E. Meistens ist der Abstandhalter 2 im Vergleich zu zwei Spiegelebenen E symmetrisch ausgelegt (vgl. Fig. 3). Vergleichbares gilt für den jeweiligen Abstützhalter 2'

Da die Rohre 1 im Ausführungsbeispiel zylindrisch ausgelegt sind, verfügen auch die Außenaufnahmen 5 über eine kreisbogenförmige Gestalt. Tatsächlich beschreiben die Außenaufnahmen 5 im dargestellten Beispiel jeweils einen Viertelkreisbogen oder einen Halbkreisbogen, was selbstverständlich nicht einschränkend zu verstehen ist. Auf diese Weise wird das jeweilige Rohr 1 zum einen mit einem Viertelkreisbogen in der zugehörigen Außenaufnahme 5 formschlüssig aufgenommen bzw. abgestützt und zum anderen ebenfalls über einen Viertelkreisbogen von dem Umreifungsband 3 gehalten. Man erkennt, dass sich die Außenaufnahme 5 und ein Haltebogen 7 des Umreifungsbandes 3 diametral im Vergleich zum Rohrmittelpunkt M gegenüberliegen. Dadurch wird eine besonders günstige Krafteinleitung in die jeweils im Eckbereich des Rohrpaketes angeordneten Rohre 1 erreicht (vgl. Fig. 3).

Die Rohre 1, welche sich in den Wandbereichen des Rohrpaketes befinden, werden demgegenüber in halbkreisförmigen außehseitigen Aufnahmen 5 gehalten, erfahren also durch den Abstandhalter 2 (Abstützhalter 2',) eine Unterstützung und Halterung über ihren halben Durchmesser. Auch in diesem Fall sorgt das Umreifungsband 3 dafür, dass eine das Rohr 1 haltende Kraft gegenüberliegend der Aufnahme 5 angreift, und zwar an einem Haltebogen 7, welcher erneut diametral im Vergleich zum Mittelpunkt bzw. Rohrmittelpunkt M des zugehörigen Rohres 1 im Vergleich zur Aufnahme 5 angeordnet ist. Der Haltebogen 7 ist bei den betreffenden Rohren 1 im Wandbereich jedoch deutlich kürzer als ein Viertelbogen gestaltet, was an dieser Stelle kein Problem darstellt, weil das betreffende Rohr 1 in der halbkreisförmigen Aufnahme 5 im Abstandhalter 2 bzw. Abstützhalter 2', gehalten wird (vgl. Fig. 3).

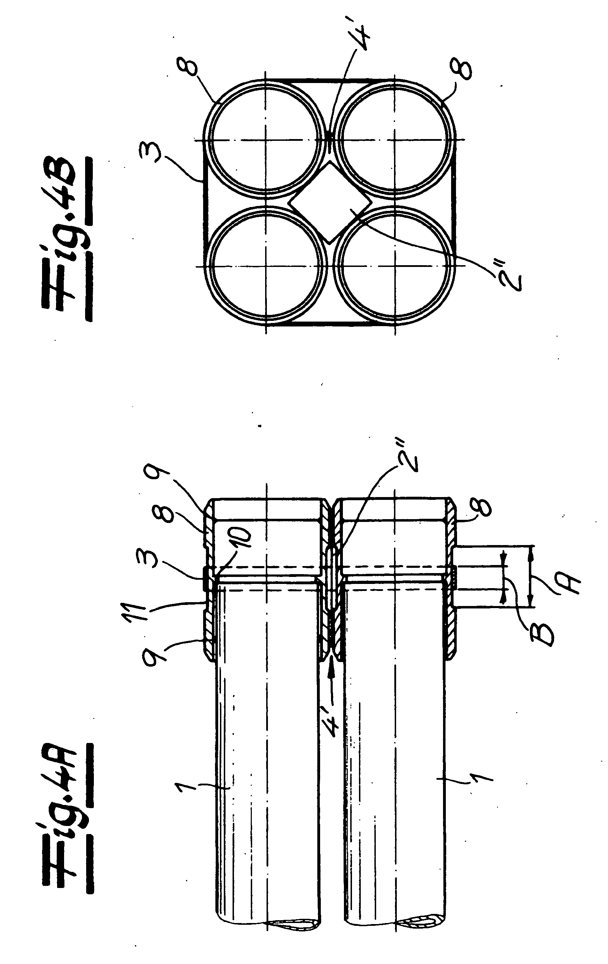

Im Rahmen der Fig. 4A ist das aus den Rohren 1 hergestellte Rohrpaket in teilweise seitlichem Schnitt gezeigt, und zwar im Verbindungsbereich zu einem benachbarten Rohrpaket. Man erkennt, dass im Anlieferungszustand regelmäßig die jeweiligen Rohre 1 eine aufgesteckte Muffe 8 aufweisen. Diese Muffe bzw. Steckmuffe 8 ist meistens einendseitig auf das jeweilige Rohr 1 aufgesteckt, findet sich also an nur einem Ende des Rohres 1, um eine problemlose Verbindung der einzelnen Rohre 1 zu einem längs erstreckten Kabelrohr zu ermöglichen.

Die Steckmuffe 8 verfügt in ihrem Innern über zwei Umfangsdichtungen 9 und einen größtenteils mittigen Anschlag 10. Bis zu diesem Anschlag 10 werden die jeweils zu verbindenden Rohre 1 in die Muffe bzw. Steckmuffe 8 in axialer Richtung bzw. in Längsrichtung L eingesteckt. Das ist möglich, weil die Rohre 1 selbst im Rohrpaket noch flexibel und beweglich gehalten werden und sich in axialer Richtung bzw. Längsrichtung L bei Bedarf verschieben lassen.

Die jeweils einendseitig an die Rohre 1 des Rohrpaketes angeschlossenen Muffen respektive Steckmuffen 8 werden erfindungsgemäß zusammengefasst, und zwar erneut mit Hilfe eines Umreifuhgsbandes 3. Zu diesem Zweck ist die jeweilige Muffe bzw. Steckmuffe 8 mit einer Ausnehmung 11 in etwa mittig an ihrem Außenumfang ausgerüstet. Das jeweilige Umreifungsband 3 greift nun in diese Ausnehmung 11 ein (vgl. Fig. 4A).

Dabei ist die Auslegung so getroffen, dass die axiale Länge A dieser Ausnehmung 10 eine Breite B des Umreifungsbandes 3 überschreitet. Regelmäßig gilt A > B und meistens sogar A > 2B.

Auf diese Weise ist sichergestellt, dass die endseitig des Rohrpaketes vorhandenen Muffen 8 einerseits eine gegenseitige Zentrierung erfahren und andererseits das die Muffen 8 zentrierende Umreifungsband 3 in axialer Richtung bzw. in Längsrichtung L rutschen kann, um die axiale Verbindung einzelner Rohre 1 mit Hilfe der jeweiligen Muffe 8 problemlos zuzulassen. Denn das Umreifungsband 3 kann im Bereich der Muffen 8 um einen gewissen Betrag in axialer Richtung hin- und herrutschen.

Schließlich erkennt man noch anhand der Fig. 4B, dass ein etwaiger Zwischenraum 4' zwischen den Muffen respektive Steckmuffen 8 erfindungsgemäß durch weitere speziell geformte Abstandhalter 2" ausgefüllt werden kann, die eine von den Abstandhaltern 2 und auch Abstützhaltern 2' abweichende Form und Gestaltung besitzen mögen. Tatsächlich sind diese Abstandhalter 2" überwiegend prismatisch gestaltet, was allerdings nur beispielhaft zu verstehen ist. Ansonsten stimmen die Abstandshalter 2" hinsichtlich ihrer Eigenschaften, den eingesetzten Materialien etc. mit den Abstandshaltern 2 und den Abstützhaltern 2' überein.

## Patentansprüche

1. Rohrpaket aus einzelnen Rohren (1), insbesondere Kabelschutzrohren (1), wobei

   - die Rohre (1) längs verlaufend zueinander mittels zumindest eines zwischengeschalteten Abstandhalters (2) verbindungsfrei zusammengefasst sind,
   - der Abstandhalter (2) einen zwischen den Rohren (1) verbleibenden Zwischenraum (4) im Wesentlichen vollständig ausfüllt,
   - zumindest eine zusätzlich außenumfangseitige Umreifung (3) vorgesehen ist,
   - wenigstens ein ergänzender und seitlich angebrachter Abstützhalter (2'), zur zusammengesetzten Bildung eines Einbaurohrbündels realisiert ist, und wobei
   - der Abstandhalter (2) und/oder der Abstützhalter (2') jeweils den zwischen den Rohren (1) verbleibenden Zwischenraum (4) sowohl in Längsrichtung (L) als auch in Querrichtung (Q) im Wesentlichen vollständig ausfüllen,

   **dadurch gekennzeichnet, dass**
   der Abstandhalter (2) und/oder der jeweilige Abstützhalter (2') aus einem frei formbaren aufgeschäumten thermoplastischen Kunststoff hergestellt sind.

2. Rohrpaket nach Anspruch 1, **dadurch gekennzeichnet, dass** mehrere seitlich angebrachte Abstützhalter (2') vorgesehen sind.

3. Rohrpaket nach Anspruch 1 oder 2, **dadurch gekennzeichnet, dass** der wenigstens eine zentrale Abstandhalter (2) und die seitlich angebrachten Abstützhalter (2') zusammen mit den Rohren (1) das hinsichtlich seiner Oberfläche geschlossene oder nahezu geschlossene Einbaurohrbündel definieren.

4. Rohrpaket nach einem der Ansprüche 1 bis 3, **dadurch gekennzeichnet, dass** das Einbaurohrbündel eine bis auf einen etwaigen Verbindungsbereich zu einem benachbarten Einbaurohrbündel quaderförmige Raumform aufweist.

5. Rohrpaket nach einem der Ansprüche 1 bis 4, **dadurch gekennzeichnet, dass** das Einbaurohrbündel bis auf einen etwaigen Verbindungsbereich zu einem benachbarten Einbaurohrbündel durch den Abstandhalter (2) und/oder die Abstützhalter (2'), jeweils geschlossene Hohlräume (4) zwischen den einzelnen Rohren (1) aufweist.

**6.** Rohrpaket nach einem der Ansprüche 1 bis 5, **dadurch gekennzeichnet, dass** der Abstandshalter (2) und/oder der jeweilige Abstützhalter (2') aus einem amorphen oder teilkristallinen Thermoplast hergestellt sind.

**7.** Rohrpaket nach einem der Ansprüche 1 bis 6, **dadurch gekennzeichnet, dass** ein oder mehrere Abstandhalter (2) und/oder Abstützhalter (2') in Längsrichtung der Rohre (1) realisiert sind.

**8.** Rohrpaket nach einem der Ansprüche 1 bis 7, **Dadurch gekennzeichnet, dass** der Abstandhalter (2) und/oder der Abstützhalter (2') jeweils spiegelsymmetrisch zu wenigstens einer Symmetrieachse (E) des Einbaurohrbündels ausgelegt sind.

**9.** Rohrpaket nach einem der Ansprüche 1 bis 8, **dadurch gekennzeichnet dass** sich die Umreifung (3) aus einem oder mehreren Umreifungsbändern (3) zusammensetzt, welche die Rohre (1) inklusive zwischengeschaltetem Abstandhalter (2) und/oder Abstützhalter (2') außen in Querrichtung (Q) umschlingen.

**10.** Rohrpaket nach einem der Ansprüche 1 bis 9, **dadurch gekennzeichnet, dass** der Abstandhalter (2) und/oder der Abstützhalter (2') außenseitige Aufnahmen (5) und/oder Innenaufnahmen (6) zur Festlegung der Rohre (1) aufweisen.

**11.** Rohrpaket nach Anspruch 10, **dadurch gekennzeichnet, dass** die Rohre (1) in den außenseitigen Aufnahmen (5) und/oder den Innenaufnahmen (6) zumindest teilweise formschlüssig gehalten sind.

**12.** Rohrpaket nach einem der Ansprüche 1 bis 11, **dadurch gekennzeichnet, dass** der Abstandhalter (2) und/oder der Abstützhalter (2') und/oder die Umreifung (3) wenigstens in ihren Berührbereichen mit den Rohren (1) vergleichbare Reibwerte wie eine Außenoberfläche der Rohre (1) aufweisen.

**13.** Rohrpaket nach einem der Ansprüche 1 bis 12, **dadurch gekennzeichnet, dass** die Rohre (1) jeweils in Reihen ohne Überlapp zueinander angeordnet sind.

**Claims**

**1.** A pipe packet made of individual pipes (1), in particular cable protection pipes (1),

- the pipes (1) being assembled without a connection extending longitudinally to one another by means of at least one interposed spacer (2),
- the spacer (2) substantially completely filling up an intermediate space (4) remaining between the pipes (1),
- at least one additional strapping (3) being provided on the external circumference,
- at least one supplementary and laterally attached support holder (2') being implemented for the assembled formation of an installation pipe bundle,
- the spacer (2) and/or the support holder (2') each substantially completely fill up the intermediate space (4) remaining between the pipes (1) both in the longitudinal direction (L) and also in the transverse direction (Q),

**characterized in that** the spacer (2) and/or the respective support holder (2') are produced from a freely moldable foamed thermoplastic.

**2.** The pipe packet according to Claim 1, **characterized in that** multiple laterally attached support holders (2') are provided.

**3.** The pipe packet according to Claim 1 or 2, **characterized in that** the at least one central spacer (2) and the laterally attached support holder (2'), together with the pipes (1), define the installation pipe bundle, which is closed or nearly closed with respect to its surface.

**4.** The pipe packet according to one of Claims 1 to 3, **characterized in that** the installation pipe bundle has a cuboid spatial shape except for a possible connection area to an adjacent installation pipe bundle.

**5.** The pipe packet according to one of Claims 1 to 4, **characterized in that** the installation pipe bundle, except for a possible connection area to an adjacent pipe bundle, has cavities (4) between the individual pipes (1) which are respectively closed by the spacer (2) and/or the support holder (2').

**6.** The pipe packet according to one of Claims 1 to 5, **characterized in that** the spacers (2) and/or the respective support holders (2') are produced from an amorphous or partially crystalline thermoplastic.

**7.** The pipe packet according to one of Claims 1 to 6, **characterized in that** one or more spacers (2) and/or support holders (2') are implemented in the longitudinal direction of the pipes (1).

**8.** The pipe packet according to one of Claims 1 to 7, **characterized in that** the spacers (2) and/or the support holders (2') are each designed as mirror-symmetric to at least one axis of symmetry (E) of the installation pipe bundle.

**9.** The pipe packet according to one of Claims 1 to 8, **characterized in that** the strapping (3) is composed of one or more strapping bands (3), which are wrapped around the pipes (1) externally, including interposed spacers (2) and/or support holders (2').

**10.** The pipe packet according to one of Claims 1 to 9, **characterized in that** the spacers (2) and/or the support holders (2') have external receptacles (5) and/or internal receptacles (6) for fixing the pipes (1).

**11.** The pipe packet according to Claim 10, **characterized in that** the pipes (1) are held at least partially in a formfitting manner in the external receptacles (5) and/or the internal receptacles (6).

**12.** The pipe packet according to one of Claims 1 to 11, **characterized in that** the spacer (2) and/or the support holder (2') and/or the strapping (3) have comparable coefficients of friction as an external surface of the pipes (1) at least in their contact areas with the pipes (1).

**13.** The pipe packet according to one of Claims 1 to 12, **characterized in that** the pipes (1) are each arranged in rows without overlap with one another.

**Revendications**

**1.** Faisceau de tubes constitué de tubes individuels (1), en particulier des tubes pour la protection de câbles (1), dans lequel

- les tubes (1) sont rassemblés sans liaison en s'étendant longitudinalement, au moyen d'au moins un écarteur intermédiaire (2),
- l'écarteur (2) remplit quasiment entièrement un espace intermédiaire (4) demeurant entre les tubes (1),
- il est prévu au moins un dispositif de cerclage (3) supplémentaire du côté du pourtour extérieur,
- il est réalisé au moins un support d'appui (2') complémentaire, qui est fixé latéralement, pour la formation assemblée d'un faisceau de tubes d'installation, et dans lequel
- l'écarteur (2) et/ou chaque support d'appui (2') remplissent quasiment entièrement l'espace intermédiaire (4) demeurant entre les tubes (1), aussi bien dans le sens longitudinal (L) que dans le sens transversal (Q),

**caractérisé en ce que**
l'écarteur (2) et/ou chaque support d'appui (2') sont fabriqués à partir d'une matière thermoplastique moussante à forme libre.

**2.** Faisceau de tubes selon la revendication 1, **caractérisé en ce que** plusieurs supports d'appui (2') fixés latéralement sont prévus.

**3.** Faisceau de tubes selon la revendication 1 ou 2, **caractérisé en ce que** l'au moins un écarteur central (2) et les supports d'appui (2') fixés sur les côtés définissent, ensemble avec les tubes (1), le faisceau de tubes d'installation fermé ou quasiment fermé à sa surface.

**4.** Faisceau de tubes selon l'une des revendications 1 à 3, **caractérisé en ce que** le faisceau de tubes d'installation présente une forme tridimensionnelle carrée, à l'exception d'une éventuelle région d'assemblage avec un faisceau de tubes d'installation voisin.

**5.** Faisceau de tubes selon l'une des revendications 1 à 4, **caractérisé en ce que** le faisceau de tubes d'installation comporte des espaces creux (4) entre les différents tubes (1), respectivement fermés par l'écarteur (2) et/ou les supports d'appui (2'), à l'exception d'une éventuelle région d'assemblage avec un faisceau de tubes d'installation voisin.

**6.** Faisceau de tubes selon l'une des revendications 1 à 5, **caractérisé en ce que** l'écarteur (2) et/ou chaque support d'appui (2') est fabriqué à partir d'un thermoplastique amorphe ou partiellement cristallin.

**7.** Faisceau de tubes selon l'une des revendications 1 à 6, **caractérisé en ce qu'**un ou plusieurs écarteurs (2) et/ou supports d'appui (2') sont réalisés dans le sens longitudinal des tubes (1).

**8.** Faisceau de tubes selon l'une des revendications 1 à 7, **caractérisé en ce que** l'écarteur (2) et/ou le support d'appui (2') sont conçus respectivement symétriquement par rapport à au moins un axe de symétrie (E) du faisceau de tubes d'installation.

**9.** Faisceau de tubes selon l'une des revendications 1 à 8, **caractérisé en ce que** le dispositif de cerclage (3) est constitué d'une ou de plusieurs bandes de cerclage (3), qui enserrent extérieurement les tubes (1), y compris l'écarteur (2) intermédiaire et/ou le support d'appui (2'), dans le sens transversal (Q).

**10.** Faisceau de tubes selon l'une des revendications 1 à 9, **caractérisé en ce que** l'écarteur (2) et/ou le support d'appui (2') comportent des admissions (5) du côté extérieur et/ou des admissions internes (6) pour la fixation des tubes (1).

**11.** Faisceau de tubes selon la revendication 10, **caractérisé en ce que** les tubes (1) sont maintenus au moins partiellement par complémentarité de forme dans les admissions (5) du côté extérieur et/ou dans les admissions internes (6).

**12.** Faisceau de tubes selon l'une des revendications 1 à 11, **caractérisé en ce que** l'écarteur (2) et/ou le support d'appui (2') et/ou le dispositif de cerclage (3) présentent, au moins dans les régions de contact avec les tubes (1), des coefficients de friction similaires à ceux d'une surface extérieure des tubes (1).

**13.** Faisceau de tubes selon l'une des revendications 1 à 12, **caractérisé en ce que** les tubes (1) sont agencés respectivement par rangées, sans se chevaucher entre eux.

Fig.1

# Fig.2

Fig.3

_Fig.4A_

_Fig.4B_

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5813106 A
- DE 29807441 U1
- DE 29724702 U1
- DE 3308482 A1
- US 1818922 A
- DE 2701209 A1
- DE 29721044 U1